# EUROPEAN PATENT SPECIFICATION

(11) **EP 2 167 569 B1**
(45) Date of publication and mention of the grant of the patent: **10.11.2010**
(21) Application number: 08775952.8
(22) Date of filing: 15.07.2008
(51) Int. Cl.: C08J 3/12, F26B 5/06

(54) **METHOD FOR THE PREPARATION OF FLUOROPOLYMER POWDERED MATERIALS**
VERFAHREN ZUR HERSTELLUNG VON PULVERFÖRMIGEN FLUORPOLYMER-MATERIALIEN
PROCÉDÉ DE PRÉPARATION DE MATIÈRES PULVÉRULENTES DE POLYMÈRE FLUORÉ

(30) Priority: 17.07.2007 GB 0713893
(43) Date of publication of application: 31.03.2010
(73) Proprietor: Whitford Ltd., Manor Park Runcorn WA7 1ST (GB)
(72) Inventor: COATES, Michael, Elverson, PA 19520 (US); WHITLOW, Robert, Iain, Warrington, Cheshire WA4 6PY (GB); GINES, Joel, Runcorn WA7 4LN (GB); WRIGHT, Julie, K., Widnes WA8 9PE (GB); MELVILLE, Andrew, J., Helsby WA6 0AL Cheshire (GB); HARVEY, Leonard, W., Downingtown, PA 19335 (US)
(74) Representative: Rees, David Christopher
(86) International application number: PCT/GB2008/002414
(87) International publication number: WO 2009/010739

(56) References cited:
- EP-A- 1 746 130
- WO-A-2007/080426
- US-A- 3 692 759
- US-A- 3 803 108

## Description

The present invention relates to a method for the preparation of Fluoropolymer powdered materials.

Fluoropolymers are long-chain polymers comprising mainly ethylenic linear repeating units in which some or all of the hydrogen atoms are replaced with fluorine. Examples include Poly (tetrafluoroethylene), Perfluoromethyl vinyl ether (MFA), Fluoro ethylene propylene (FEP), Per Fluoro Alkoxy (PFA), Poly(chlorotrifluoroethylene) and Poly(vinylfluoride). They are amongst the most chemically inert of all polymers and are characterised by an unusual resistance to acids, bases and solvents. They have unusually low frictional properties and have the ability to withstand extremes of temperature. Accordingly, fluoropolymers are utilised in a wide variety of applications in which resistance to extreme environments is necessary. Current applications include the formation of tubing and packing materials within chemical plants, semiconductor equipment, automotive parts and structural cladding.

There are several applications which require the powdered form of the fluoropolymer. The fluoropolymer may be applied to a surface by electrostatic spraying of the powder. Uses would include the coating of household cookware to increase non-stick properties and abrasion resistance, and the coating of automotive parts to increase resistance to environmental weathering.

At present, two methods are generally used to produce the powdered form of a fluoropolymer. Spray drying methods comprise the pumping of an aqueous dispersion of the fluoropolymer feed into an atomising system, generally located at the top of a drying chamber. The liquid is atomised into a stream of heated gas to evaporate the water and produce a dry powder. This method has several limitations. The requirement that the aqueous dispersion is pumped into the atomising system limits the use of this process to pumpable materials, and the spray dried agglomerates are tightly bound to each other and resist subsequent disagglomeration. In addition, only non-fibrillatable materials can be processed, as atomisation may result in the fibrillation of the fluoropolymer, resulting in an intractable 'marshmallow' material which is difficult to handle.

An alternative method involves the coagulation of the particles within an aqueous dispersion. Coagulation is facilitated by the use of high mechanical shear, the addition of acids or the addition of gelling agents and subsequent treatment with a water immiscible organic liquid. The coagulated particles can be separated from the residual liquid by filtration and subsequently dried, typically using tray, belt or flash dryers. The coagulated granules are usually case hardened for ease of handling. However, the formation of agglomerates results in a particle size that is too large for use in conventional powder spray application techniques. Milling, traditionally used to adjust the particle size distribution, can cause fibrillation of the particles, to produce an intractable material which is difficult to handle. The case hardened material also produces a tight agglomerate which resists subsequent disagglomeration.

In both these methods, it maybe difficult to incorporate a modifier that will improve the wear characteristics of the fluoropolymer.

It is therefore an object of the present invention to provide a method for the preparation of a modified fluoropolymer powdered material with improved wear characteristics.

According to the present invention there is provided a method for the preparation of a modified fluoropolymer material in powder form which comprises the steps of: forming a suspension of solid particles of the fluoropolymer together with particles of silicon carbide (SiC) as a modifier in an aqueous liquid carrier; freezing the aqueous suspension; and subsequently subjecting the frozen aqueous suspension to sublimation, thereby producing dry particles of the fluoropolymer, modified by the presence of the SiC modifier, in powder form.

The addition of the SiC modifier to the fluoropolmer in the aqueous carrier allows the modifier particles to disperse efficiently between the fluoropolymer particles thus imparting improved wear characteristics to the finished powder material once applied and cured as film. Post milling or irradiation of the freeze-dried modified fluoropolymer material can also enhance its suitability as a powder coating material.

Preferably the particle size of the fluoropolymer is in the range 30 to 350nm, preferably 200 to 250nm e.g. about 230nm. Preferably, the SiC modifier has a particle size in the range 40nm to 50nm, preferably 1µm to 20µm e.g. about 10µm and is present as up to 2 wt%, preferably 0.1 to 1 wt% e.g. 0.5 wt% of the MFA/SiC mixture, expressed on a dry weight basis.

The method is particularly suitable for the processing of Perfluoromethyl vinyl ether (MFA), Fluoro ethylene propylene (FEP) and Per Fluoro Alkoxy (PFA).

Preferably, the modified fluoropolymer powdered material has a particle size that is sufficiently small to allow application by conventional powder spray application techniques. The agglomerates (with a primary particle size of about 0.2µm) produced may have an average diameter of from 1 to 100µm, more preferably from 20 to 30µm.

Preferably, the suspension of the solid fluoropolymer particles in the liquid carrier is frozen in a freezer at a temperature below 0°C. More preferably, the suspension is frozen at a temperature in the range -60°C to -20°C. Typically, freezing might be completed in 6 hrs to 24 hrs.

Preferably, the suspension of the solid fluoropolymer particles in the liquid carrier is poured, scooped or otherwise transferred into a tray prior to freezing. Preferably, the tray containing the suspension of the solid fluoropolymer particles is then placed into the freezer and frozen within the tray.

Preferably, the aqueous carrier is water with or without surfactant and with or without bridging solvents (organic solvent used to aid the dispersion/solvating of additional resins). If bridging solvents are used, they should be at concentrations low enough and have high enough melting points so that freezing is not inhibited.

Preferably, the sublimation is carried out using sub-atmospheric pressure or a vacuum. The use of a reduced pressure causes sublimation of the carrier from a frozen state directly to a gaseous state, avoiding the solid to liquid and liquid to gas transition. Preferably, the reduced pressure is created by means of a vacuum pump. Preferably, the reduced pressure is in the range 0.01atm to 0.99atm, more preferably 0.04atm to 0.08atm. Typically, sublimation might be completed in 12 hrs to 48 hrs.

The method is preferably carried out at a temperature which is in practice below the glass transition temperature of the fluoropolymer. The glass transition temperature, T_{g}, of a polymer is the temperature at which it changes from a glassy form to a rubbery form. The measured value of T_{g} will depend on the molecular weight of the polymer, its thermal history and age, and on the rate of heating and cooling. Typical values are MFA about 75°C, PFA about 75°C, FEP about -208°C, PVDF about -45°C.

The temperature is controlled to assist the sublimation process and avoid melting of the carrier liquid. It is a beneficial coincidence that these controls also maintain temperatures below the Tg values for some of the materials listed. Thus, the method may be carried out at ambient temperature. Alternatively, the method may be carried out at a temperature above ambient temperature, in order to reduce the time taken to complete the process.

The modified fluoropolymer particles may be treated after sublimation has occurred or at any point during the process of the present invention. Such modifications may include, milling or irradiation of the fluoropolymer. Irradiation of the fluoropolymer would generally be carried out after milling to assist in particle size control. Milling adjusts the particle size distribution of the modified fluoropolymer, for example reducing the mean particle size to produce a finer powder. Typically the milling would be carried out conventionally in a pin or jet mill.

Where the method additionally comprises irradiation of the modified fluoropolymer particles, this would typically be carried out on the powder, but alternatively on the suspension. Irradiation adjusts the melt characteristics of the modified fluoropolymer, for example to lower the melting temperatures/glass transition temperatures and increase the melt flow rate.

The method of the present invention does not result in the tight agglomeration of the particles, but instead produces a fine powder, which is suitable for use in extrusion, conventional powder spray application techniques or for redispersion in aqueous or organic media. The friable powder can be broken down easily for particle size modification.

The method of the invention may be carried out at a temperature below the glass transition temperature of the fluoropolymer, in contrast to the known processes involving spray drying and coagulation, which require temperatures well in excess of 100°C. The use of ambient temperature allows greater energy efficiency, while the use of temperatures that are above ambient temperature, but below the glass transition temperature, can be used to increase the speed with which the sublimation proceeds. Temperatures above ambient can also be used to assist secondary drying, to drive off any remaining liquid carrier traces.

The method of the invention can be used to prepare a modified fluoropolymer powdered material whether the fluoropolymer would tend to be fibrillatable or non-fibrillatable. A fibrillatable polymer is one which forms fibers when exposed to a shear force. The known methods, which involve spray drying and coagulation, both expose the solid fluoropolymer particles to shear forces, which can result in the production of an intractable material. The present invention does not involve shear forces at any stage and is therefore suitable for use with a fibrillatable fluoropolymer.

The method of the invention may be used to prepare a modified fluoropolymer powdered material from a pumpable or non-pumpable suspension of the solid fluoropolymer particles in a liquid carrier. The suspension may be non-pumpable because of high viscosity or shear sensitivity. The method does not involve any steps where the suspension must be pumped. Instead, the suspension may be poured or scooped into the tray for freezing, and the solid, frozen block may be transferred into the vacuum chamber.

The invention may be carried into practice in varying ways and some embodiments will now be described in the following Example:

### Example 1

Experiment with the addition of nano SiC as a modifier to MFA powder.

Lake Chemicals and Minerals Ltd Beta Nano Silicon Carbide with a particle size of 40 nm was added slowlywith slow speed mixing to a 6202-1 MFA aqueous dispersion to give 0.2% SiC content on dry weight. The mixture was poured into trays and forzen prior to freeze drying. Xylan 4018/F9727 Black primer was applied to a grit blasted aluminium panel. The freeze-dried powder was sieved through a 90 micron sieve to remove large particles. The powder was applied by electrostatic powder spray gun over wet primer. The panel was flashed off at 150°C for 5 minutes and cured at 400°C for 20 minutes. A continuous smooth film was formed at 25-30 microns powder.

Hyflon 6202-1 MFA dispersion was freeze-dried and sieved through a 90 micron sieve. The powder was applied by electrostatic powder spray gun over wet Xylan 4018/F9729 Black on a grit blasted aluminium panel. The panel was flashed off at 150°C for 5 minutes and cured at 400°C for 20 mintes

Panels were evaluated using the reciprocating abrasion tester with a 3kg weight and 3M Scotchbrite 7447 Abrasive pad. The pad was changed every 1000 cycles.

The unmodified MFA 6202-1 panel with a total dry film thickness of 35-46 microns has first substrate exposure after 8000 cycles and 5% substrate exposure after 10000 cycles.

The 0.2% SiC modified MFA 6202-1 panel with a total dry film thickness of 35-44 microns has first substrate exposure after 12000 cycles and 5% substrate exposure after 16000 cycles.

## Claims

1. A method for the preparation of a modified fluoropolymer material in powder form which comprises the steps of: forming a suspension of solid particles of the fluoropolymer together with particles of silicon carbide (SiC) as a modifier in an aqueous liquid carrier; freezing the aqueous suspension; and subsequently subjecting the frozen aqueous suspension to sublimation, thereby producing dry particles of the fluoropolymer, modified by the presence of the SiC modifier, in powder form.

2. A method as claimed in Claim 1, **characterised in that** the fluoropolymer is perfluoromethyl vinyl ether (MFA).

3. A method as claimed in Claim 1 or Claim 2, **characterised in that** the particle size of the fluoropolymer is in the range 30 to 350nm.

4. A method as claimed in any of Claims 1 to 3, **characterised in that** the SiC modifier has a particle size in the range up to 50µm.

5. A method as claimed in any preceding claim, **characterised in that** the SiC is present as up to 2 wt% of the MFA/SiC mixture, expressed on a dry weight basis.

6. A method as claimed in any preceding claim, **characterised in that** sublimation is achieved by means of a sub-atmospheric pressure.

7. A method as claimed in Claim 6, **characterised in that** the reduced pressure is in the range of 0.01 to 0.99atm.

8. A method as claimed in any preceding claim, **characterised in that** sublimation is carried out at a temperature below the glass transition temperature of the fluoropolymer.

9. A method as claimed in Claim 8, **characterised in that** sublimation is carried out at ambient temperature.

10. A method as claimed in Claim 8, **characterised in that** sublimation is carried out at a temperature between ambient temperature and the glass transition temperature of the fluoropolymer.

11. A method as claimed in any preceding claim, **characterised in that** the suspension of the solid particles in the aqueous carrier is frozen at a temperature in the range -60°C to -20°C.

12. A method as claimed in any preceding claim, **characterised in that** the suspension of the solid particles in the aqueous carrier is frozen in trays.

13. A method as claimed in any preceding claim, **characterised in that** the modified fluoropolymer particles are subjected to milling and/or irradiation.

14. A method as claimed in any preceding claim, **characterised in that** the fluoropolymer is fibrillatable and/or non-pumpable.

## Patentansprüche

1. Verfahren zur Herstellung eines modifizierten Fluorpolymermaterials in Pulverform, welches die Schritt umfasst: Bilden einer Suspension aus festen Partikeln des Fluorpolymers zusammen mit Partikeln von Siliciumcarbid (SiC) als Modifikator in einem wässerigen flüssigen Träger; Gefrieren der wässerigen Suspension; und nachfolgend Unterwerfen der gefrorenen wässerigen Suspension unter Sublimation, **dadurch** Herstellen von trockenen Partikeln des Fluorpolymers, modifiziert durch die Anwesenheit des SiC-Modifikators, in Pulverform.

2. Verfahren wie in Anspruch 1 beansprucht, **dadurch gekennzeichnet, dass** das Fluorpolymer ein Perfluormethylvinylether (MFA) ist.

3. Verfahren wie in Anspruch 1 oder Anspruch 2 beansprucht, **dadurch gekennzeichnet, dass** die Partikelgröße des Fluorpolymers im Bereich 30 bis 350 nm ist.

4. Verfahren wie in einem von Ansprüchen 1 bis 3 beansprucht, **dadurch gekennzeichnet, dass** der SiC-Modifikator eine Partikelgröße im Bereich bis zu 50 µm hat.

5. Verfahren wie in einem vorangehenden Anspruch beansprucht, **dadurch gekennzeichnet, dass** das SiC als bis zu 2 Gew.-% des MFA/SiC-Gemisches vorhanden ist, ausgedrückt auf einer Trockengewichtsbasis.

6. Verfahren wie in einem vorangehenden Anspruch beansprucht, **dadurch gekennzeichnet, dass** Sublimation mittels eines subatmosphärischen Drucks erreicht wird.

7. Verfahren wie in Anspruch 6 beansprucht, **dadurch gekennzeichnet, dass** der verringerte Druck im Bereich von 0,01 bis 0,99 atm ist.

8. Verfahren wie in einem vorangehenden Anspruch beansprucht, **dadurch gekennzeichnet, dass** Sublimation bei einer Temperatur unterhalb der Glasübergangstemperatur des Fluorpolymers durchgeführt wird.

9. Verfahren wie in Anspruch 8 beansprucht, **dadurch gekennzeichnet, dass** Sublimation bei Umgebungstemperatur durchgeführt wird.

10. Verfahren wie in Anspruch 8 beansprucht, **dadurch gekennzeichnet, dass** Sublimation bei einer Temperatur zwischen Umgebungstemperatur und der Glasübergangstemperatur des Fluorpolymers durchgeführt wird.

11. Verfahren wie in einem vorangehenden Anspruch beansprucht, **dadurch gekennzeichnet, dass** die Suspension der festen Partikel in dem wässerigen Träger bei einer Temperatur im Bereich von -60°C bis -20°C gefroren wird.

12. Verfahren wie in einem vorangehenden Anspruch beansprucht, **dadurch gekennzeichnet, dass** die Suspension der festen Partikel in dem wässerigen Träger in Schalen gefroren wird.

13. Verfahren wie in einem vorangehenden Anspruch beansprucht, **dadurch gekennzeichnet, dass** die modifizierten Fluorpolymerpartikel Mahlen und/oder Bestrahlung unterworfen werden.

14. Verfahren wie in einem vorangehenden Anspruch beansprucht, **dadurch gekennzeichnet, dass** das Fluorpolymer fibrillierbar und/oder nicht-pumpfähig ist.

## Revendications

1. Procédé de préparation d'un matériau de polymère fluoré modifié sous forme de poudre, qui comprend les étapes consistant à : former une suspension de particules solides du polymère fluoré conjointement avec des particules de carbure de silicium (SiC) en tant qu'agent modificateur dans un support liquide aqueux ; congeler la suspension aqueuse ; et ensuite soumettre la suspension aqueuse congelée à une sublimation, produisant de cette manière des particules sèches du polymère fluoré, modifié par la présence de l'agent modificateur SiC, sous forme de poudre.

2. Procédé selon la revendication 1, **caractérisé en ce que** le polymère fluoré est le perfluorométhyl-vinyl-éther (MFA).

3. Procédé selon la revendication 1 ou la revendication 2, **caractérisé en ce que** la taille de particule du polymère fluoré se situe dans la plage de 30 à 350 nm.

4. Procédé selon l'une quelconque des revendications 1 à 3, **caractérisé en ce que** l'agent modificateur SiC a une taille de particule située dans la plage allant jusqu'à 50 µm.

5. Procédé selon l'une quelconque des revendications précédentes, **caractérisé en ce que** le SiC est présent jusqu'à 2 % en poids du mélange MFA/SiC, exprimé sur une base de poids sec.

6. Procédé selon l'une quelconque des revendications précédentes, **caractérisé en ce que** la sublimation est obtenue au moyen d'une pression sous-atmosphérique.

7. Procédé selon la revendication 6, **caractérisé en ce que** la pression réduite est située dans la plage de 0,01 à 0,99 atm.

8. Procédé selon l'une quelconque des revendications précédentes, **caractérisé en ce que** la sublimation est réalisée à une température inférieure à la température de transition vitreuse du polymère fluoré.

9. Procédé selon la revendication 8, **caractérisé en ce que** la sublimation est réalisée à température ambiante.

10. Procédé selon la revendication 8, **caractérisé en ce que** la sublimation est réalisée à une température entre la température ambiante et la température de transition vitreuse du polymère fluoré.

11. Procédé selon l'une quelconque des revendications précédentes, **caractérisé en ce que** la suspension des particules solides dans le support aqueux est congelée à une température située dans la plage de -60º C à -20º C.

12. Procédé selon l'une quelconque des revendications précédentes, **caractérisé en ce que** la suspension des particules solides dans le support aqueux est congelée dans des plateaux.

13. Procédé selon l'une quelconque des revendications précédentes, **caractérisé en ce que** les particules de polymère fluoré modifié sont soumises à un broyage et/ou à une irradiation.

14. Procédé selon l'une quelconque des revendications précédentes, **caractérisé en ce que** le polymère fluoré est fibrillable et/ou non pompable.
